Europäisches Patentamt

(19) European Patent Office

Office européen des brevets

(11) EP 0 855 367 A1

(12) EUROPEAN PATENT APPLICATION

(43) Date of publication:
29.07.1998 Bulletin 1998/31

(51) Int. Cl.$^6$: C01B 33/037

(21) Application number: 98101009.3

(22) Date of filing: 21.01.1998

(84) Designated Contracting States:
AT BE CH DE DK ES FI FR GB GR IE IT LI LU MC
NL PT SE
Designated Extension States:
AL LT LV MK RO SI

(30) Priority: 22.01.1997 JP 9540/97
22.01.1997 JP 9539/97
22.01.1997 JP 9537/97
28.01.1997 JP 13711/97
28.03.1997 JP 77972/97
31.03.1997 JP 79318/97

(71) Applicant:
Kawasaki Steel Corporation
Chuo-ku, Kobe-shi, Hyogo 651 (JP)

(72) Inventors:
• Nakamura, Naomichi,
c/o Kawasaki Steel Corp.
Chiba-shi, Chiba 260 (JP)
• Abe, Masamichi,
c/o Kawasaki Steel Corp.
Chiba-shi, Chiba 260 (JP)
• Hanazawa, Kazuhiro,
c/o Kawasaki Steel Corp.
Chiba-shi, Chiba 260 (JP)
• Baba, Hiroyuki,
c/o Kawasaki Steel Corp.
Chiba-shi, Chiba 260 (JP)

• Yuge, Noriyoshi,
c/o Kawasaki Steel Corp.
Chiba-shi, Chiba 260 (JP)
• Sakaguchi, Yasuhiko,
c/o Kawasaki Steel Corp.
2-2-3 Uchisaiwaicho Chiyoda-ku Tokyo 100 (JP)
• Kato, Yoshiei,
c/o Kawasaki Steel Corp.
Chiba-shi, Chiba 260 (JP)
• Aratani, Fukuo,
c/o Kawasaki Steel Corp.
2-2-3 Uchisaiwaicho Chiyoda-ku Tokyo 100 (JP)
• Saito, Kenji,
c/o Kawasaki Steel Corp.
2-2-3 Uchisaiwaicho Chiyoda-ku Tokyo 100 (JP)

(74) Representative:
Grünecker, Kinkeldey,
Stockmair & Schwanhäusser
Anwaltssozietät
Maximilianstrasse 58
80538 München (DE)

Remarks:
A request for correction of the text has been filed
pursuant to Rule 88 EPC. A decision on the request
will be taken during the proceedings before the
Examining Division (Guidelines for Examination in
the EPO, A-V, 3.).

(54) Method for removing boron from metallurgical grade silicon and apparatus

(57) Method and apparatus for refining metallurgical
grade silicon to carry out deboronization rapidly in pro-
duction of silicon for solar cells, by blowing a mixed gas
of water vapor and inert gas on a surface of molten sili-
con, and wherein a reducing gas is further applied to the
molten metal surface, and including the further step of
controlling mix ratios of water vapor and reducing gas,
the angle of blowing of the gas, and the deboronization
parameters.

Fig.1

**Description**

FIELD OF THE INVENTION

This invention relates to purified silicon for use in solar cells.

A purity from 5N (Five nines) to 6N (Six nines) is required for this silicon. The allowable content of each impurity varies depending on the kind of element that is present. In the cases of phosphorus, boron, carbon, aluminum, titanium, oxygen and the like, photoelectric conversion efficiency requires that the phosphorus impurity shall be less than 0.1 ppmw, boron in the range of from 0.1 to 0.3 ppmw, carbon and oxygen less than 5ppmw, and iron, aluminum and titanium less than 0.1 ppmw. In order to provide solar cells that are utilizable in various fields, the silicon for the solar cells should also be mass produceable inexpensively.

Although metallurgical grade silicon in a purity of from 98 to 99% can be mass produced by the known heat carbon reduction method, removal of impurities is required for use in solar cells.

In metallurgical purification of metallurgical grade silicon, some metallic elements can be removed by directional solidification, making use of a solid-liquid distribution coefficients well below 1. However, phosphorus and boron cannot be removed by solidifying purification because their segregation coefficients are too close to 1. The phosphorus can be removed by evaporation by vacuum melting. The carbon can be removed by precipitation or solidification of SiC, with the carbon in solid solution removed as CO through an oxidation purification process. Removal of boron remains a problem.

This invention relates to a method for removing boron from metallurgical grade silicon, more particularly, to a method for melting the raw material and removing boron from the raw material more effectively.

PUBLISHED ART

Conventionally, the silicon for use in solar cells has been produced mainly by vaporization methods, similarly to the silicon for use in semiconductors. The conventional process comprises producing a so-called metallurgical grade silicon of relatively low purity in the molten state by reducing a silicon oxide ($SiO_2$)of high purity with a carbon of high purity, and by subjecting the resulting metallurgical grade silicon to a silanization process. This is followed by distillation purification, and by further purifying by precipitation, and then solidifying to form wafers. This procedure is, however, not suitable for mass production, as it requires high production costs, and further because the resulting silicon is too high in purity for many uses. For some uses it is even required to adjust purity by adding, for example, boron. Therefore, the conventional method is unsuitable and impractical for producing silicon for solar cells.

Several methods in which a roughly purified solid metallurgical grade silicon is metallurgically purified to silicon for solar cells have been proposed.

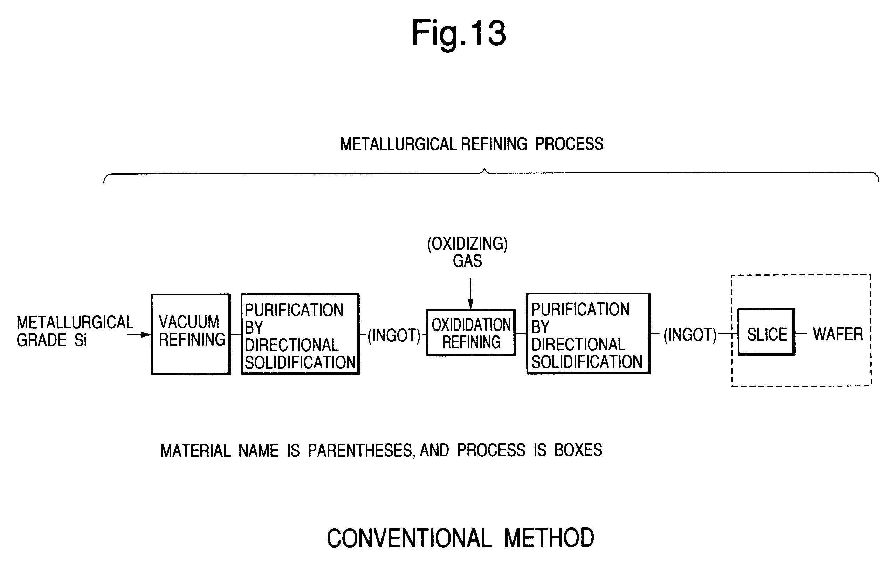

One such example is illustrated in Fig.13. It involves dephosphorization of metallurgical grade silicon by vacuum melting, thereby rough removal of the metallic impurity elements (Al, Ti, Fe and the like) by directional solidification, another melting process for deboronizing and decarbonizing by oxidation refining, and then removing the aforesaid metallic impurity elements while simultaneously carrying out solidifying purification for production of an ingot. In such a method the metallic impurities contained in the metallurgical grade silicon such as aluminum, iron, titanium and the like are removed by two steps of directional solidification purification, taking advantage of their small solid-liquid distribution coefficients. The carbon in the form of SiC is precipitated on the surface of the silicon upon solidification, and the carbon in the form of a solid solution is removed as CO. The phosphorus is removed under vacuum by making use of its high vapor pressure. The boron is removed by oxidation purification by adding an oxidizing substance such as $H_2O$, $CO_2$, $O_2$ and the like. Since this method is a metallurgical process, mass production of parts of the process may be made feasible by up-scaling the facilities, and it may be expected that this part of the production cost can be significantly reduced by making use of an economically reasonable melting and refining process. But the problem of removing boron remains.

This invention relates to a special method for removing boron while using the beneficial features of the conventional process described above.

Unexamined Japanese Patent Publication (Kokai) No. 63-218506 describes removal of boron from metallurgical grade silicon. The method comprises oxidizing and removing boron by melting a metallurgical grade silicon and by blowing high temperature plasma gas on metallurgical grade silicon that is held in a container of silica. A mixed gas of hydrogen and argon is used as a plasma generating gas and a mixed gas of oxygen (0.005 to 0.05vol%), hydrogen (1 to 99.995vol%) and argon is added in a second step. However, that method suffers from the following defects:

(1) Heat utilization efficiency is poor and uneconomical;
(2) The region of melting of metallurgical grade silicon is narrow, preventing effective mass production; and
(3) Large fly losses and evaporation losses slow the removal rate, due to low concentration of oxygen in the plasma gas.

Unexamined Patent Publication (Kokai)No.4-228414 proposes an another technique for refining a large amount of metallurgical grade silicon. In this method, boron is removed as an oxide by melting metallurgical grade silicon by induction or resistance heating in a container lined with silica or in a refractory made mainly of silica, and by blowing high temperature plasma gas on the surface of the molten silicon. In this method, water vapor (0.1 to 10 vol%) is added to argon plasma gas. According to this method some of the aforesaid defects in the art No. 63-218506 could be remarkably improved, and as a result, silicon for solar cells would seem to be produced more economical. However, the maximum amount of water vapor to be added to the plasma gas is 10 vol%, because if the water vapor concentration excess 10%, a film of silica is formed on the surface of the molten silicon, resulting in a great slowing of the boron removal rate. Accordingly the productivity rate of such silicon for use in solar cells cannot be increased as much as expected.

Unexamined Patent Publication No.5-139713 proposes a method for accelerating the boron removal rate, in which a tuyere is attached to the bottom of a container. A mixed gas comprising an inert gas and an oxidizing gas is blown through the tuyere and vigorous stirring is carried out. However, this method also has workability defects. The flow rate of the gas blown from the tuyere is actually quite limited. This is probably because the tuyere disclosed was a straight tube-type tuyere, and because blowing of the gas could not be stopped or interrupted due to detrimental backflow of the molten silicon back into the tuyere.

Unexamined Patent Publication No.4-193706 describes a method for removing boron by holding molten silicon in a container made of silica and providing a gas blowing tuyere on the bottom of the container. Blowing an inert gas such as argon and stirring the molten silicon reacts the boron with oxygen from the silica container. Removal of boron is said to be accelerated by increasing the oxygen potential by adding a gas such as water vapor, carbon dioxide or oxygen to the inert gas. Although a boron content of 0.3ppmw or less can be obtained the rate of removing boron is still slow. This is probably for the reason that the supply rate of oxidizing gas is necessarily slow.

## OBJECTS OF THE INVENTION

It is the object of this invention to remove boron much more rapidly than heretofore achievable in conventional methods, and to produce a purified silicon for use in solar cells more effectively and economically.

## SUMMARY OF THE INVENTION

We have closely studied acceleration phenomena related to the rate of deboronization of silicon. We have discovered a new method for removing boron from metallurgical grade silicon. It involves use of a mixed plasma jet comprising inert gas and water vapor, mixed with a special added reducing gas. It is conveniently blown on the surface of molten metallurgical grade silicon and has remarkable effect. The inert gas is one or more of the group of the periodic table group, including He and Ar. The reducing gas is hydrogen, or carbon monoxide, or a paraffinic hydrocarbon($C_nH_{2n+2}$) where n is an integer of 1 to 4.

It is preferred not only to blow the plasma jet of a mixture of inert gas, water vapor and reducing gas onto the surface of the metallurgical grade molten silicon, but also concurrently to blow a mixed gas of water vapor and inert gas into the bottom of the molten silicon.

The reducing gas preferably comprises hydrogen gas in an amount from about 5 to about 90 vol% of the total of inert gas, water vapor and reducing gas.

This invention is further directed to an apparatus for removing boron from metallurgical grade silicon comprising a container holding molten metallurgical grade silicon, a plasma torch directed to blow gas on the surface of the metallurgical grade silicon, a plasma jet containing water vapor, and a tuyere for blowing a mixed gas of water vapor and an inert gas into the bottom of the container and into the silicon.

In conventional practice the concentration of water vapor possible to add to the plasma jet of the inert gas was limited to 10 vol% because an undesirable thin film otherwise formed on the surface of the molten silicon. We have discovered a new way to increase the concentration of water vapor without forming such a film. As a beneficial result, the rate of removing boron is significantly accelerated. We have discovered that great advantages are achieved by blowing a reducing gas on the surface of the molten metallurgical grade silicon or by blowing it through a tuyere connected through the bottom of the refining container, or both.

We have carefully weighed the fact that a higher concentration of water vapor yields a higher rate of removal of boron against the resulting inhibition of removal of boron. And accordingly, the upper limit of the percentage of water vapor to be added is limited, in accordance with this invention, to about to 40 vol%. We have discovered that this is the region in which the best rate of boron removal can be achieved with little interference due to formation of a detrimental silica film.

This invention accordingly removes boron rapidly from metallurgical grade silicon by blowing on the surface of molten silicon a plasma jet of an inert gas combined with a reducing gas, and about 10-40 vol% of water vapor, based upon the total volume of plasma gas, hydrogen gas and water vapor.

The temperature of the molten silicon is in excess of about 1550°C in accordance with this invention. A stirring force is preferably applied to the molten metallurgical grade silicon, and this is provided by the plasma jet blowing.

In this invention the formation of a silica film on the surface of the molten silicon is inhibited. As a result the rate of deboronization is surprisingly significantly accelerated.

In this invention the water vapor and the reducing gas and the plasma jet of the inert gas may be blown independently through separate nozzles, or provided as a premixed gas of water vapor and reducing gas independently blown through a nozzle while the plasma jet is blown through a separate nozzle and blown onto the surface of the molten silicon.

When the flow velocity of the plasma jet is $V_P$ the blowing point or nozzle ejection location of the plasma jet is X, the flow velocity of the reducing gas or premix of water vapor plus reducing gas is $V_H$, the blowing point or nozzle ejection location of the reducing gas or water vapor plus reducing gas is Y, the crossing point of the center line of plasma jet and the center line of the flow of the water vapor, reducing gas or water vapor plus reducing gas is Z, this invention is preferably characterized in that the angle X-Z-Y is substantially in accordance with the equation:

$$\sin \theta < C(V_P/V_H) \tag{1}$$

where, $0.1 \leq C \leq 0.2$

Further, when the point at which the center line of plasma jet flow and the surface of the molten silicon intersect is Point P, and when a plane which passes through Point P and intersects the center line of plasma gas flow is Plane A, and when the distance between the nozzle ejection point for water vapor or reducing gas plus water vapor, or water vapor, and the foot of a perpendicular set up to Plane A is R, and when the distance between the nozzle ejection nozzle for water vapor or reducing gas plus water vapor and the Plane A is d, the relationship between d and R is approximately:

$$d \geq R/\tan \theta \tag{2}$$

In this case, argon or helium, or a mixture, is preferably utilized as the inert gas.

The reactivity of the mixed gas blown on the molten surface can be increased by raising the degree of dissociation or degree of ionization of the water vapor or reducing gas plus plasma jet by passing premixed water vapor plus reducing gas through an arc of a plasma torch. The rate of removal of boron is even further increased.

Any potential problem of electrode oxidation can be overcome by using a hollow copper electrode as a plasma electrode.

Various kinds of heating means may be provided in a single refining container or in two or more containers equipped with separate or different heating means. The molten silicon may be transferred from a first refining container to a second refining container, with heating means used in the change-over. The heating means may be non-transfer type plasma heating, or transfer type plasma heating, or high frequency induction heating, or electric resistance heating.

Transfer type plasma heating generates an arc in the plasma flow by utilizing an anode at the bottom of the container and by applying a voltage between the anode and the cathode of a plasma torch provided at an upper location. This melting method has better thermal efficiency than non-transfer type plasma heating, since it uses the arc for heating. However, it has the defect that the molten silicon cannot be stirred well since the flow velocity of the plasma gas is lower compared to the gas flow in the non-transfer type. Furthermore, when this melting method is used, impurities penetrate through the anode at the bottom of the container which is in direct contact with the molten silicon.

On the other hand, in non-transfer type of plasma heating, the gas passing through the plasma torch is heated to a high temperature by applying a voltage between the anode and the cathode which are attached to the plasma torch to generate the arc only inside the torch. The high temperature plasma jet flow thus obtained is injected at a high speed through the torch, and the substance to be heated is melted and heated. Although this melting method provides a strong stirring force since the plasma jet flow has a high speed, it is poor in thermal efficiency for the reason that the arc is generated only inside the torch, and that the substance to be heated is out of contact with the arc.

BRIEF DESCRIPTION OF THE DRAWINGS

The drawings show specific forms of the invention for illustrative purposes, and are not intended to provide any limiting interpretation on the scope of the invention, which is defined in the appended claims.

Figure 1 is a vertical sectional view, showing one example of the apparatus according to this invention. This shows a non-transfer type plasma heating apparatus, an induction heating coil and a porous plug tuyere.

Figure 2(a) is a graph showing a comparison of treating time between the method of this invention and a conventional method.

Figure 2(b) is a graph showing a relationship of treating time against reducing gas ratio in the method of this invention.

Figure 3 is a graph showing a relationship between the temperature of the molten silicon and treating time.

Figure 4 is a schematic view showing a physical relationship between a nozzle for adding a reducing gas water vapor mixture attached to the side wall of a plasma torch.

Figure 5 is a schematic view showing a hollow electrode non-transfer type plasma torch.

Figure 6 is a schematic view showing a conventional non-transfer type plasma torch.

Figure 7 is a longitudinal sectional view showing one example of a non-transfer type of apparatus for carrying out removal of boron from metallurgical grade silicon according to this invention. This embodiment is equipped with a high frequency induction heating coil and a porous plug tuyere.

Figure 8 is a longitudinal sectional view, showing another example of the apparatus according to this invention, using non-transfer type plasma heating, and an electric heater and a porous plug tuyere.

Figure 9 is a longitudinal sectional view, showing another example of apparatus according to this invention. Two refining containers are shown, one with high frequency induction heating and a plasma torch for preheating and the other with a non-transfer plasma torch.

Figure 10 is a longitudinal sectional view, showing still another example of apparatus according to this invention. This embodiment comprises two containers, one with electrical resistance heating and the other with a non-transfer plasma torch.

Figure 11 is a schematic side view, showing another example of apparatus according to this invention showing two containers, one heating with a transfer torch and the other with a non-transfer torch.

Figures 12(a) and 12(b) are schematic views, showing examples of apparatus used for carrying out the conventional method for removing boron from the metallurgical grade silicon.

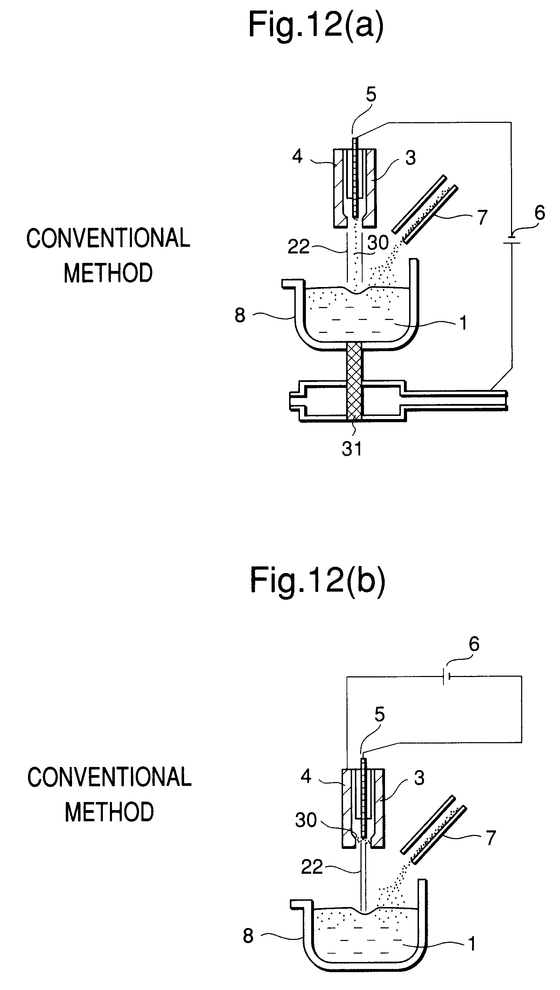

Fig. 12(a) is an example using a transfer type plasma, while Fig. 12(b) is an example using a non-transfer type plasma; and

Figure 13 is a flow chart showing a method for producing solar cells which is proposed by the Applicants independently of this invention.

## DESCRIPTION OF PREFERRED EMBODIMENTS OF THE INVENTION

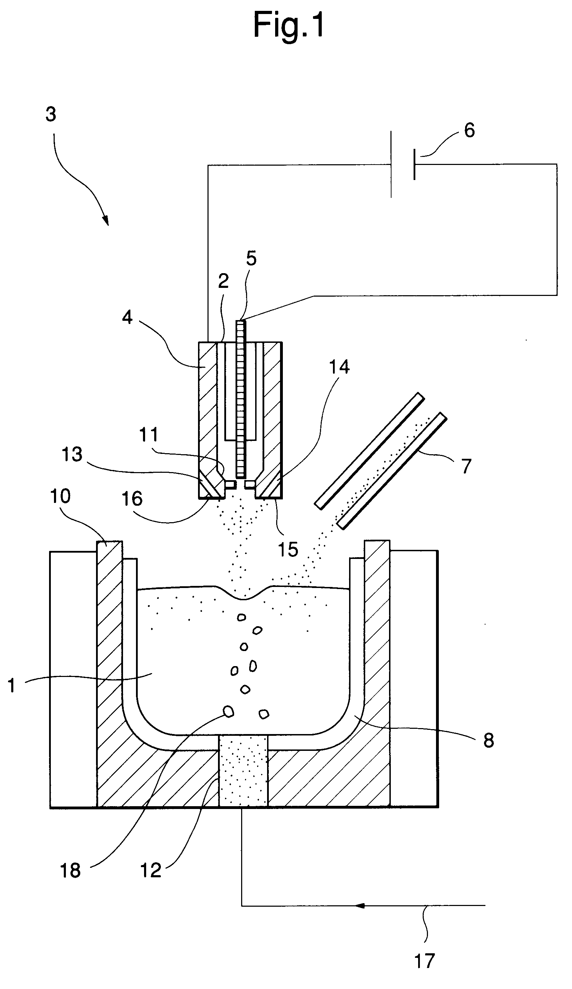

In this description we refer initially to the use of hydrogen as a reducing agent, the use of a porous plug and stirring. Fig. 1 shows an example of apparatus for removing boron from metallurgical grade silicon 1 according to this invention. The method comprises using a non-transfer type torch 3 which generates argon plasma jet 2 for heating and melting the silicon 1, a non-transfer type plasma electric source 6 connected for applying voltage between an anode 4 and a cathode 5 which are mounted to the torch 3, a supply chute 7 for supplying metallurgical grade silicon to a refining container 8, which is shaped to contain the molten silicon 1, and which is lined with a silica or silica refractory. A flame-resistant container 10 is provided for protecting the refining container 8.

The non-transfer type plasma electric source 6 is an electric source that applies a voltage to generate an arc 11 only in the interior of the torch 3. It heats, in situ, the argon gas for generating high temperature plasma. This non-transfer type plasma heating is in some respects inferior to transfer type plasma in thermal efficiency, since not all of the substance to be treated is heated by the arc 11. But it has the advantage of providing a strong gas flow force for physically stirring the melt. The plasma torch 3 is provided with a water vapor inlet nozzle 13 for blowing water vapor 16 into the container and upon the molten silicon surface in order to oxidize the boron. And, in order to increase the stirring effect upon the molten silicon 1 and to accelerate the removal of boron, a tuyere 12 is provided for blowing a mixed gas of water vapor and an inert gas upwardly into the molten silicon through the bottom of the refining container 12.

The method for removing boron according to this invention is well applied to the case when the molten silicon 1 held in the refining container 8 is heated by plasma and maintained at a high temperature, and then the surface of the molten silicon is blown with plasma jet, water vapor and reducing gas.

Although hydrogen gas ($H_2$), carbon monoxide gas (CO), or $C_nH_{2n+2}$ hydrocarbon may be used as a reducing gas in this invention, hydrogen gas is preferably used. It allows utilization of exhaust gas, since hydrogen gas is produced as a by-product of boron oxidization.

By adding a reducing gas according to this invention important benefits result:

(1) The rate of removal of boron is significantly increased even with the same addition of water vapor.
(2) Although the concentration of added hydrogen is limited to about 10 vol% of the total, major increase of purification rate is achieved.

(3) Although an increased concentration of water vapor may in some cases lead to a higher rate of removal of boron, we have discovered that silica film tends to be formed on the surface of molten silicon and becomes an obstacle or barrier to boron removal. Accordingly, the upper limit of amount of addition of water vapor is limited to the region where the adverse influence of silica film is small and the rate of removal of boron is stable. Thus the introduction of water vapor is limited to about 40 vol% of the total of inert gas, water vapor and reducing gas.

Although it is not yet apparent what specific mechanism governs improvement of rate of removal of boron under the influence of the reducing gas, it is speculated that the reducing gas acts to depress the rate of formation of silica film, which is otherwise a barrier to the boron removal.

The concentration of hydrogen gas is preferably in the range of from about 5 to 90 vol% in this invention. Even if it is above about 90%, the rate of removal of boron is scarcely improved, and, on the contrary, when it is less than about 5%, the improvement of rate of removal of boron is small, and the formation of silica film under the influence of a high concentration of water vapor is very significant.

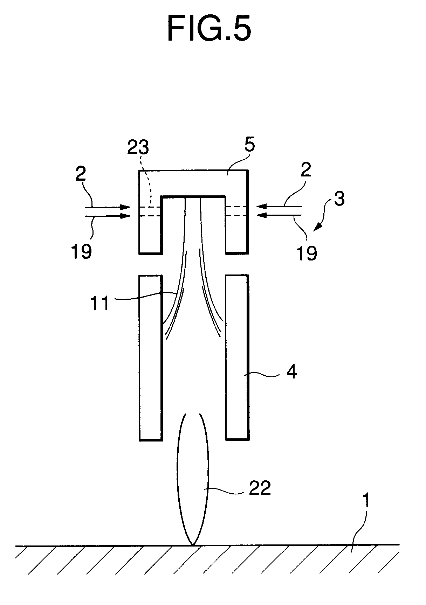

In this invention, in order to enhance the removal of boron, one form of the aforesaid bottom tuyere 12 is a porous ceramic, that is, a porous plug 12 (Fig. 5). As a result any tendency toward back-flow of the molten silicon 1 is inhibited whenever the blowing of gas from the bottom of the container is temporarily stopped. And further, since the diameter of bubbles 18 rising inside the molten silicon 1 is minute compared with a straight tube type conventional tuyere 12 of Fig. 1, splashing losses from the surface of the molten silicon is decreased. The material of the porous plug 12 may preferably be silica, from the viewpoint of inhibiting contamination.

Another advantage of this invention is that a strong stirring force is applied to the molten silicon by blowing high-speed plasma jet 2 (Fig. 1). Further, conventional means for stirring the molten silicon may be additionally employed, such as electromagnetic stirring by a revolving magnetic field or a high frequency magnetic field, or stirring by blowing gas or the like. And, in certain cases, the mixed gas may be blown through a gas nozzle immersed in the molten silicon to accelerate the oxidation of boron.

Heretofore when water vapor was added to the plasma jet in excess of about 10 vol%, considerable silica film was formed on the surface of the molten silicon, the removal of boron was retarded. However, this invention allows increasing the concentration of water vapor up to about 40 vol%. It may be thought that this is because the silica film can hardly be formed because of presence of reducing gas in the blowing mixed gas, and/or by applying a stirring force to the molten silicon.

The expression vol % of water vapor. as used herein, means the volume ratio (that is, the molar ratio) of water vapor to the total blowing mixed gas (inert gas, reducing gas and water vapor).

In the practice of this invention, the temperature of the molten silicon may preferably be above about 1550 °C. The reason is that when the temperature is equal to or less than about 1550 °C, the beneficial effects of this invention are not substantial, and the film of silica can not be effectively removed.

The following examples have been selected for illustration, and are not intended to limit the scope or content of the invention, which is defined in the appended claims.

(A) ADDITION OF REDUCING GAS

EXAMPLE 1

30 Kg of metallurgical grade silicon 1, as in Fig. 1, were charged into the refining container 8, and blown with non-transfer type plasma gas 2 generated by a plasma torch 3 of 300 KW power output to make molten silicon. The power output was decreased to 200 KW and the temperature of the molten silicon was maintained at from 1620 to 1630°C. Water vapor and hydrogen were added to the plasma gas 2 at a water vapor content of 10 vol%, and hydrogen 50 vol%, with the remainder inert gas as plasma jet. The water vapor and hydrogen were introduced through the nozzles 13 and 14 (Fig. 1), respectively. The total flow of gas blown was 300L/min. The refining container 8 was a quartz crucible. While the hydrogen and water vapor silicon were being added, a sample was taken occasionally to measure its specific resistance. The specific resistance of the silicon was 1.5 $\Omega \cdot cm$ after treatment for 100 minutes. Accordingly the concentration of boron was judged to have reached the desired value and the plasma treatment with water vapor and hydrogen was terminated.

Experiments under the same condition with CO and $CH_4$ instead of hydrogen, showed the same result.

EXAMPLE 2

The plasma treatment was carried out as in EXAMPLE 1, using a mixed gas comprising an inert gas, water vapor and CO at a flow rate of 5L/min, introduced through the porous plug 12 extending through the bottom of container 8. While the hydrogen and water vapor were added, samples were taken occasionally to measure specific resistance of the silicon in the container. Since the specific resistance had reached 1.5 $\Omega \cdot$ cm after the passage of 90 minutes, the concentration of boron was judged to have reached the desired value and the treatment with water vapor and hydrogen plasma gas was terminated.

EXAMPLE 3

30 Kg of metallurgical grade silicon 1 were molten on the same condition of EXAMPLE 1, and electromagnetically stirred with an electromagnetic induction stirrer (not shown) in the process of deboronization treatment. While the hydrogen and water vapor were added, sample were taken occasionally to measure specific resistance of the silicon in the container. Since the specific resistance had reached 1.5 $\Omega \cdot$ cm after treatment for 90 minutes, the concentration of boron was judged to have reached the desired value and the deboronization treatment was terminated.

COMPARATIVE EXAMPLE 1

Deboronization was carried out in the apparatus shown in Fig.1. The percentage of water vapor was 10 vol% and no hydrogen was used. All other conditions were the same as those of EXAMPLE 1. The temperature of the molten silicon in the container was 1630°C.

The specific resistance of the silicon reached 1.5 $\Omega \cdot$ cm after a 360-minute treatment. The concentration of boron was judged to have reached the desired value and the deboronization treatment was terminated.

In the case of EXAMPLES 1-3 and COMPARATIVE EXAMPLE 1, boron samples were collected, each from an ingot formed by solidification after deboronization down to 0.1 ppmw, while the other impurities satisfied the requirements for use in solar cells. However, in the cases of EXAMPLES 1 to 3, the time of plasma treatment (hereinafter referred to as ("treating time") was reduced to one-third or one-quarter of the time required by the conventional method. The results are shown in Table 1 which follows.

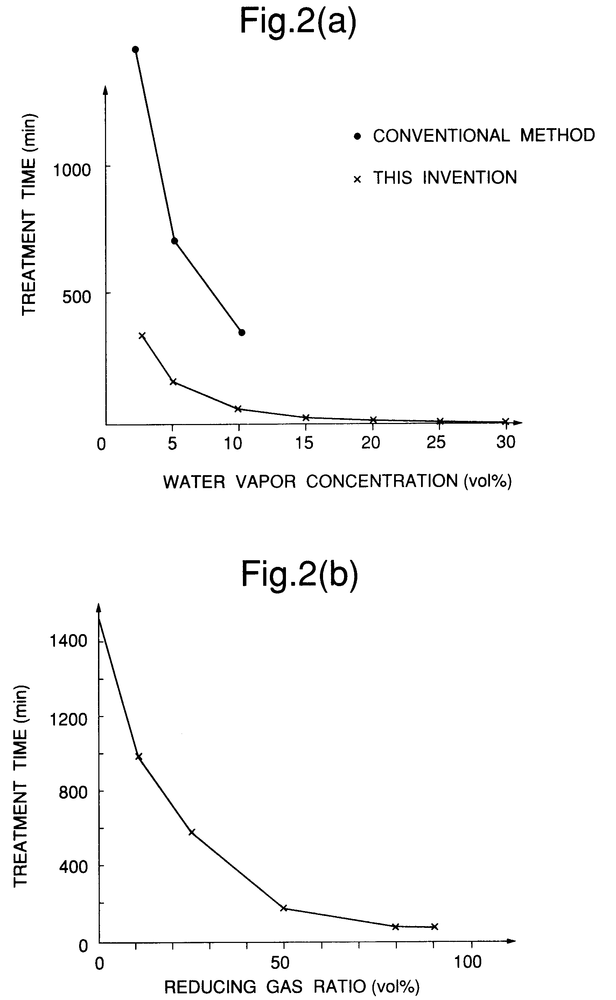

Fig.2(a) shows the time required for deboronization (the time required for the specific resistance to drop to 1.5 $\Omega \cdot$ cm), plotted against water vapor ("water vapor concentration"). The treatments were the same as those reported in EXAMPLE 1 and COMPARATIVE EXAMPLE 1. The total gas flow and hydrogen concentration were fixed at 300L/min and 50vol%, respectively, and only the concentration of water vapor added was changed. For comparison, the time required for the conventional method, in which the total gas flow was 300L/min and no hydrogen was added, was determined and is shown in Fig. 2(a). It is apparent that the rate of deboronization was equal to or less than one-quarter, even using the same concentration of water vapor as the conventional method. In the conventional method, when the concentration of water vapor added was in excess of 10 vol%, a silica film was formed on the surface of the molten silicon, and deboronization did not proceed.

Fig.2(b) shows the time required for deboronization when the concentration of water vapor was fixed at 5%, while the hydrogen concentration was varied from 0% to 90%, and the remainder was Ar. All other conditions were the same as those of EXAMPLE 1.

The Fig. 2(b) curve shows that the treating time for deboronization rapidly decreased with the increase of hydrogen concentration.

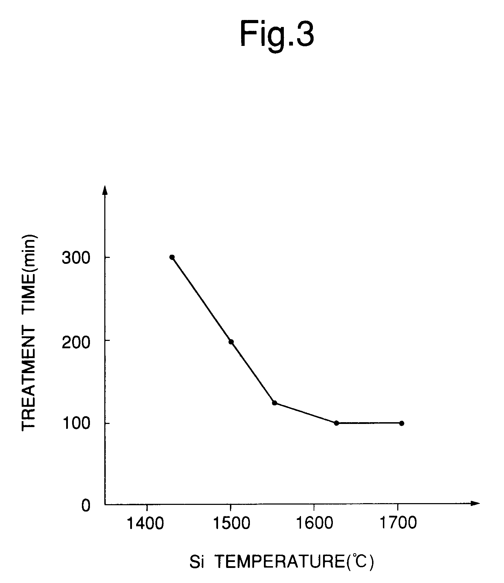

Fig. 3 shows the dependency of the deboronization rate on the temperature of the molten silicon. When the temperature of the molten silicon was in excess of 1550°C, the deboronization time was reduced. It was believed that the formation of a silica film on the surface of the molten silicon was inhibited at the higher temperature.

Table 1

|  | $H_2$(%) (vol. %) | $H_2O$(%) (water vapor) (Vol. %) | Bottom blowing | External stirring | Temperature of bath of molten silicon | Deboronization time |
|---|---|---|---|---|---|---|
| EXAMPLE 1 | 50 | 10 | no | no | 1630°C | 100 min |
| EXAMPLE 2 | 50 | 10 | yes | no | 1630°C | 90 min |
| EXAMPLE 3 | 50 | 10 | no | magnetic induction | 1630°C | 90 min |
| EXAMPLE 5 | 50 | 10 | no | no | 1630°C | 90 min |
| COMPARISON EXAMPLE 1 | 0 | 10 | no | no | 1630°C | 360 min |

(B) : MIXING GAS BLOWING ANGLE AND METHOD

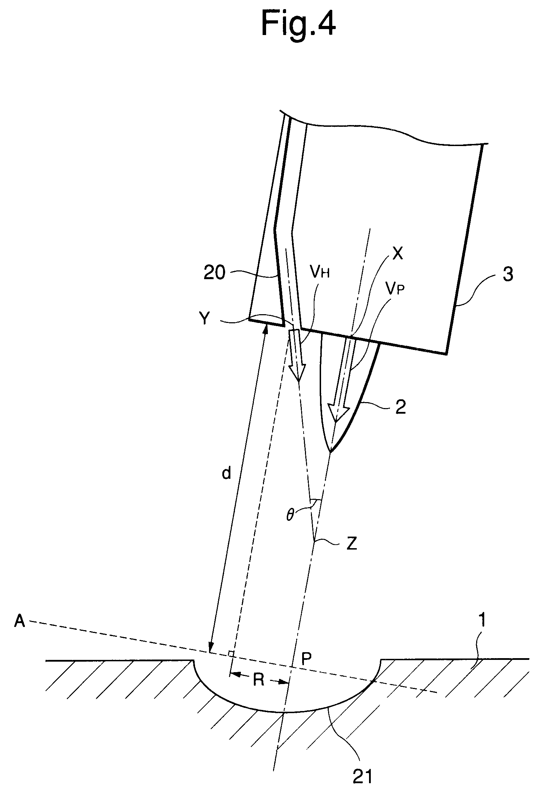

Testing was performed by adding water vapor and reducing gas arranged at a torch angle to the central axis as shown in Fig. 4. The deboronization rate was observed to have varied significantly, depending on the values of θ. We have found that the angle θ which is capable of achieving maximum deboronization is in the range satisfying the following equation (1):

$$\sin \theta < C (V_P / V_H) \tag{1},$$

wherein $V_P$ is the blow velocity of the plasma jet, $V_H$ is the blow velocity of water vapor or reducing gas combined with water vapor, and C is a constant in the range of about 0.1-0.2. By controlling the angle θ to the aforesaid range, the water vapor or reducing gas plus water vapor 19 (Fig. 5) is swallowed up effectively in the plasma jet 22 (Fig. 5), and supplied highly efficiently to the firing point where deboronization takes place.

The blowing of water vapor and reducing gas is not limited to a nozzle mounted at tip of torch 3 of Fig. 1. Other independent blowing means, for example a gas blowing lance, may be utilized instead or in addition.

If we designate the point at which the center line of plasma gas flow and the surface of the molten silicon intersect as "Point P", and if we designate a plane which passes through Point P and intersects the center line of the plasma jet flow as "Plane A," and if we designate the distance between the blowing nozzle of the passageway carrying water vapor or water vapor plus reducing gas and the foot of a perpendicular set up to Plane A as "R," and if we designate the distance between the blowing nozzle the Plane as "d," the method for removing boron from metallurgical grade silicon is particularly effective when controlled approximately to the relationship:

$$d \geq R/\tan \theta \tag{2}.$$

When "d" is outside the scope of equation(2), the effectiveness of water vapor to reach the firing point suffers, even if the angle θ is within the range of equation(1). As a result, the deboronization rate is significantly decreased.

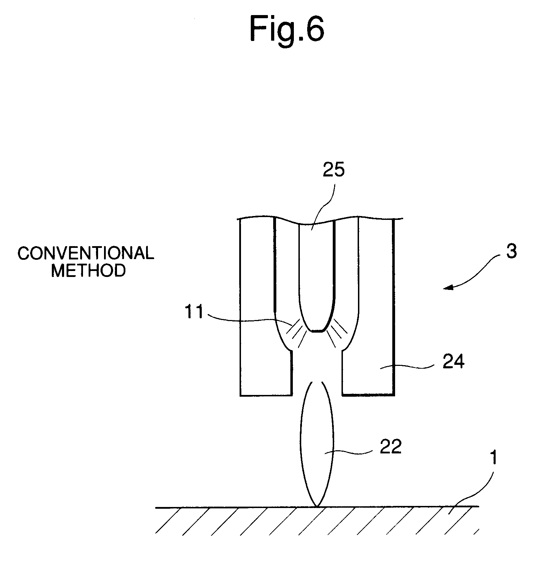

Although the mixture of reducing gas and water vapor 19 was conventionally added from the periphery of an arc such as arc 11 in Fig.6, the gas 19 is supplied jet inside the plasma torch 3 and blown as a plasma jet, as shown in Fig.5.

As shown in Fig.6, when the plasma jet 22 is blown on molten silicon 1 by means of plasma torch 3 equipped with a tungsten electrode 25 as an anode and a copper electrode 24 as a cathode, mixing of plasma jet with water vapor was difficult for the reason that the water vapor, passing through the plasma torch in the form of an arc, tended to oxidize the tungsten electrode. This invention overcomes the problem by using a copper hollow electrode.

In Fig. 5, one example of hollow electrode plasma torch commercially available and useful in this invention is shown. In this example, a copper hollow electrode is shown as the cathode 5 and also as the anode 4. Water vapor is easily mixed within a plasma jet such as argon in the plasma torch 3 provided for blowing plasma jet on the molten silicon surface. Accordingly, it is possible to introduce water vapor and reducing gas into plasma jet to mix through gas supplying nozzle 23 (Fig. 5) and heated to a high temperature by arc 11 and ionized. Since the copper hollow electrode has a large charging area, the energy is dispersed over relatively large area, and this may contribute to extension of life of the torch.

It is believed that when the degree of dissociation and degree of ionization of the plasma increase, its reactivity is also increased. In any event, in this invention, the concentration of water vapor is preferably about 10 to 40%, and the reducing gas concentration is preferably about 5% to 90%.

EXAMPLE 4

20 kg of metallurgical grade silicon were charged into a refining container 8 as shown in Fig.1, and melted by argon plasma jet using a 300kW power output plasma torch 3. The power output was reduced to 200kW after complete melting, and reducing gas mixed with water vapor was introduced at flow rate of 50NL/min through a nozzle 20 (Fig. 4) which was placed at an angle to the direction of flow of the plasma jet. The nozzle provided a flow rate of 200NL/min and was located 300mm apart from the center of the blowing nozzle of the plasma jet. The nozzle maintained the temperature of the molten silicon and controlled the volume ratio of water vapor to the total amount of gas blown on the surface of the molten silicon. The blowing velocity of plasma jet $V_P$ (Fig. 4) was calculated for 500m/sec on the basis of the depth of the depression formed on the surface of the molten silicon and the distance between the torch and the surface of the molten silicon, which was 2000mm. The blowing velocity of the reducing gas-water vapor mixture $V_H$ (Fig. 4) was 120m/sec.

At this stage plasma jet 22 was blown on the surface of the molten silicon. The amount of reaction time needed to bring the specific resistance of the sample collected from the molten silicon to 1.5 Ω·cm was regarded as the time of completion of deboronization. At that time the plasma treatment was terminated.

Table 2 shows values of angle θ and the requisite treating time.

Judging from calculated values of $V_P$ and $V_H$, the angle θ should be less than about 47°C in order to satisfy equation (2). It is apparent from Table 2 that deboronization treatment at θ=15° and θ=40°, within the range of θ of this invention, was completed much more quickly as compared with the test at θ=55° outside the range of this invention. In the aforesaid example, since the distance between the center of the firing point of the plasma and the foot of a perpendicular line drawn from the water vapor blowing nozzle to the surface of the molten silicon R was 300mm, the distance "α" between the location of tip of the torch at which the water vapor nozzle was placed and the surface of the molten silicon should be above the ( R/tanθ) value as shown in Table 2, in order to satisfy equation(2). When d was 100mm, smaller than ( R/tan θ ) in case of use of the angle θ=15°, the treatment was carried out and the time required for deboronization was double the time consumed when d was 200mm, satisfying equation (2) as shown in Table 1.

Table 2

|  | θ | d | R/tanθ | deboronization time |
|---|---|---|---|---|
| EXAMPLE | 15° | 200 mm | 112 mm | 100 min |
|  | 40° | 200 mm | 36 mm | 90 min |
| COMPARISON EXAMPLE | 55° | 200 mm | 21 mm | 300 min |
|  | 15° | 100 mm | 111 mm | 180 min |

EXAMPLE 5

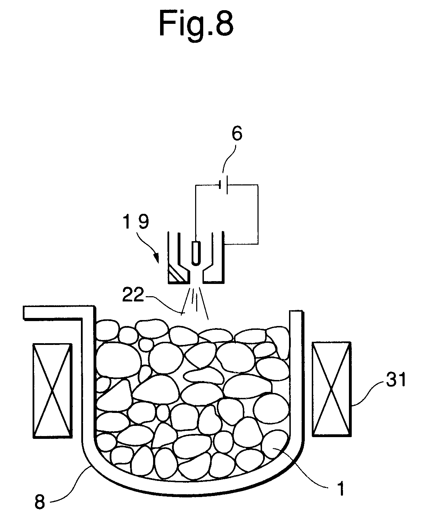

In the deboronization of 30Kg of metallurgical grade silicon under the same conditions as those of EXAMPLE 1, a plasma torch having structure shown in Fig.8 was used. Water vapor and hydrogen were premixed with argon plasma jet so that the same flow rate and composition as those of EXAMPLE 1 were used.

From the beginning of addition of hydrogen and water vapor, samples were occasionally taken. The plasma treatment was terminated when the specific resistance of the sample was 1.5 $\Omega \cdot$ cm. As shown in Table 1, the time of plasma treatment was further shortened as compared with EXAMPLE 1 by mixing inert gas, water vapor and hydrogen gas before passing through the arc region. And, the concentration of boron in the silicon ingot which was solidified under the same conditions as those of EXAMPLE 1 was 0.1ppmw, which was suitable for silicon for solar cells.

(C) HEAT SOURCE

It will be appreciated that rapid melting is necessary, particularly melting solid metallurgical grade silicon while reducing power consumption in the deboronization step. A large amount of energy is required in converting the solid silicon to a liquid. In normal practice, as shown in Fig.12, the plasma which is the heat source for deboronization is also used as the heat source for melting. However, we have created a counter-measure for reducing power consumption. We have discovered that the power consumption can be reduced by combining the use of another heat source having a thermal efficiency that is significantly higher than plasma.

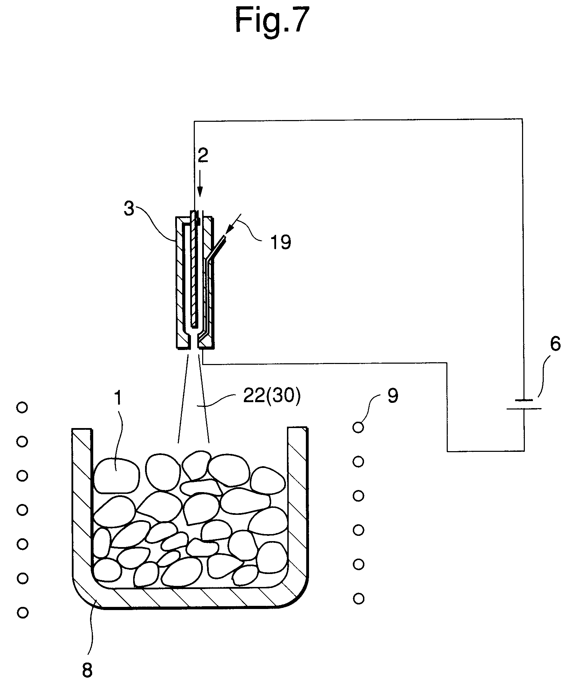

Fig.7 shows one example of the apparatus serving that purpose. It comprises a container 8 holding molten silicon 1 for example, silica container 8, non-transfer type plasma torch 3 located above the container 8, and high frequency induction coil 9 surrounding the container 8. Metallurgical grade silicon 1 is heated by non-transfer type plasma to begin melting the metallurgical grade silicon 1. After a certain time, by means of high frequency induction, the metallurgical grade silicon 1 is melted and is maintained at high temperature. The time of changeover of these heat sources is timed for when a portion of the metallurgical grade silicon 1 begins to melt. Since the melted portion has high electric conductivity, the solid portion is heated by induction current flowing the molten portion. As a result the remaining solid portion is heated and melted. At this time, a large portion of metallurgical grade silicon 1 still maintains its solid phase; only a small slight portion begins to melt. Accordingly the operator can easily observe the time for changeover by visually checking the surface of the metallurgical grade silicon. It may also be detected by use of a sensor (such as an optical pyrometer or the like), not illustrated.

In this invention, after the change to high frequency induction heating, the plasma jet into which the reducing gas and water vapor 19 are introduced through plasma torch 3 blows on the molten silicon after the silicon has been completely melted in the container 8. At that time, since additional heat is being supplied by the plasma jet itself, the high frequency electric power may be reduced or cut off. If the purpose is only to maintain the silicon in a molten state, non-transfer type plasma is an acceptable heat source, and is much more advantageous than any other heating means because of significant reduction of deboronization time under the influence of its high stirring force.

Fig.8 shows another embodiment in which a resistance heating element 31 is used instead of the high frequency induction coil 9 shown in Fig.7. In this embodiment, pre-heating by plasma at the beginning of melting of the solid raw material is not necessary. After the raw material has been completely melted by resistance heating, the heat source is changed to plasma to perform the deboronization step.

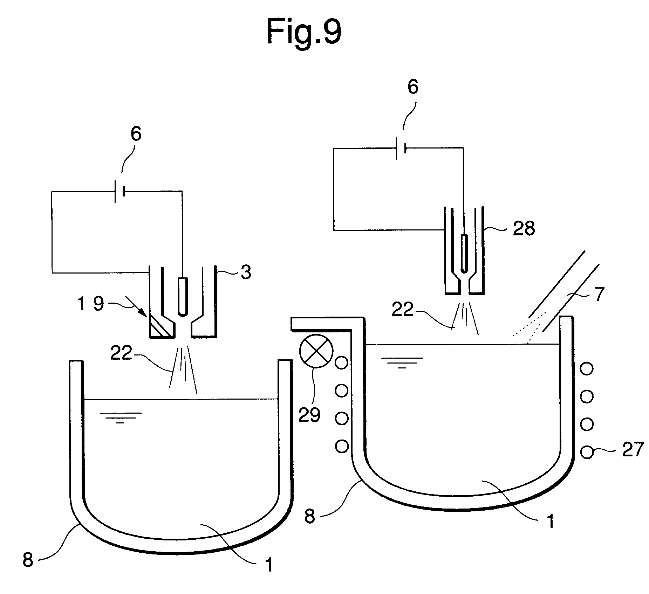

In this invention as previously described the melting of metallurgical grade silicon and its deboronization are carried out in a single container using two different kinds of heating means placed in the container. However, also in accordance with this invention, the melting of solid raw material and deboronization of the molten raw material may be carried out in separate containers. One example of this is shown in Fig.9.

The apparatus of Fig.9 separates the functions of the apparatus of Fig.7 into two parts. The right-hand container 8 is provided with an undersized non-transfer type plasma torch 28. It is used for pre-heating prior to use of high frequency electric power. A transfer of molten silicon from the right-hand container to the left-hand container is carried out by movement of the first container, although this invention is not limited thereto.

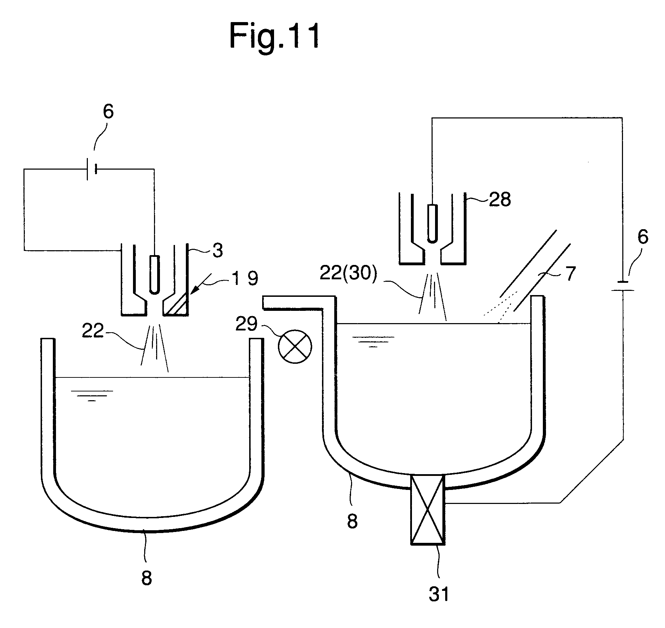

On the other hand, the apparatus illustrated in Fig.11 is an apparatus in which a transfer type plasma electrode 28 is placed over the right-hand container 8 and metallurgical grade silicon 1 is melted with high thermal efficiency. Molten silicon after being melted is heated by means of the non-transfer type plasma torch 3 placed in the left-hand container. Reducing gas and water vapor 19 are added from the side of the blowing nozzle for plasma jet above the silicon in the left-hand container 8.

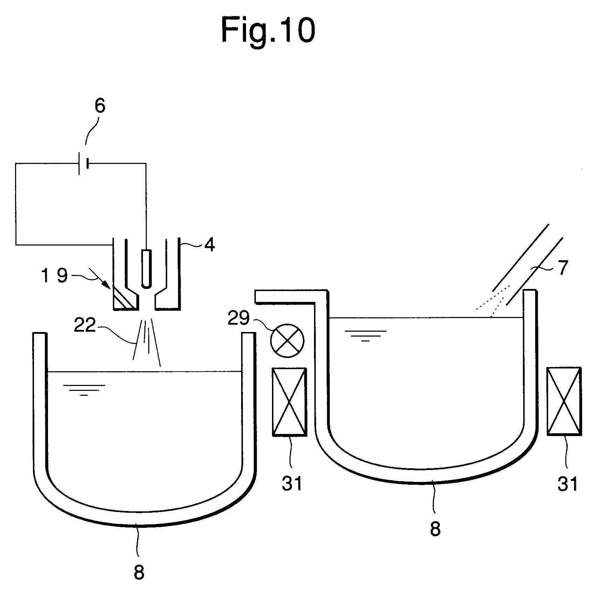

Fig. 10 shows an apparatus in which the heating means of the right-hand container is an electric resistance heating element 31. The silicon supplied from the raw material feeder 7 to the first container is heated by means of the electric resistance heating element 31 and melted. The melt is transferred to the left-hand container by tilting the right-hand container. In the left-hand container water vapor and reducing gas are blown together with plasma jet onto the surface of the molten silicon through a non-transfer type torch 19, and deboronization proceeds.

In the method of this invention shown in Figs. 9, 10 and 11, since a heating means of high thermal efficiency is used when the solid silicon is melted, and since a heating means endowed with a high deboronization rate is used to perform the deboronization step, the power consumed and treatment time are reduced more extensively, as compared with conventional methods using a single heat source,

EXAMPLE 6

Each 30 kg of metallurgical grade silicon 1 containing approximately 6 ppmw of impurity was melted by making use of an apparatus as shown in Figs. 9-11. Deboronization of molten silicon was carried out. The heat source, conditions for blowing of oxidizing gas, time of changeover of heating source, and operating time used in each of the steps are shown in Table 3. Table 3 also shows the conditions for deboronization according to the conventional method making use of the apparatus illustrated in Figs. 12(a) and 12(b).

The results of each operation were evaluated as electric power consumption and concentration of impurities after melting. The results are shown in Table 4. In all embodiments of this invention, the time required for melting and deboronization was significantly shortened, and electric power consumption was small compared with conventional methods. The boron concentration in the ingot obtained was 0.2 ppmw as shown in Table 4, an excellent purity for the purpose. Although there was a carbon contamination from the bottom electrode for the apparatus shown in Fig. 12(a), the carbon concentration was within allowable range, that is, < 5ppmw when using the methods of this invention.

EP 0 855 367 A1

TABLE 3

| | Apparatus | Heat Source (kW) | Time (hr) | Composition of gas blown on the molten silicon surface | Total electric power used (kWh) | Impurities |
|---|---|---|---|---|---|---|
| EXAMPLE | Fig. 7 | non-transfer type 100<br>high frequency 100<br>non-transfer type 200 | 0.5<br>2<br>2 | -<br>-<br>$10\%$-$H_2O$,$40\%$-$H_2$ | 650 | no |
| | Fig. 8 | resistance heating 200<br>non-transfer type 200 | 1.5<br>2 | -<br>$40\%$-$H_2O$,$40\%$-$H_2$ | 700 | no |
| | Fig. 9 | non-transfer type 50<br>high frequency 100<br>non-transfer type 200 | 1<br>2<br>2 | -<br>-<br>$10\%$-$H_2O$,$40\%$-$H_2$ | 650 | no |
| | Fig.10 | resistance heating 200<br>non-transfer type 200 | 1.5<br>2 | -<br>$10\%$-$H_2O$,$40\%$-$H_2$ | 700 | no |
| | Fig.11 | transfer type 100<br>non-transfer type 200 | 2<br>2 | -<br>$10\%$-$H_2O$,$40\%$-$H_2$ | 600 | no |
| CONVENTIONAL METHODS | Fig.12 (a) | transfer type 100<br>transfer type 80 | 2<br>8 | -<br>$10\%$-$H_2O$,$40\%$-$H_2$ | 840 | electrode material several decades 10ppmw |
| | Fig.12 (b) | non-transfer type 300<br>non-transfer type 200 | 6<br>2 | -<br>$10\%$-$H_2O$,$40\%$-$H_2$ | 2200 | no |

**Claims**

1. In a method of removing boron from molten metallurgical grade silicon containing boron as an impurity, the step which comprises;

   blowing onto the surface of said molten silicon a mixed gas comprising a reducing gas and water vapor.

2. A method claimed in claim 1, wherein said mixed gas comprises a reducing gas, water vapor and at least one inert gas.

3. A method as claimed in claim 1 or 2, wherein at least one component of said mixed gas is blown from a plasma torch as a plasma jet.

4. A method as claimed in claim 3, including the further step of blowing said inert gas or said gas comprising said inert gas mixed with said water vapor into said molten silicon from a bottom of a container holding said molten silicon.

5. A method as claimed in claim 4, wherein said inert gas or said gas comprising said inert gas mixed with said water vapor is blown into said molten silicon through said bottom of said container through a tuyere comprising a porous plug in said bottom.

6. A method as claimed in claim 3, wherein said reducing gas is hydrogen and wherein the hydrogen concentration in said mixed gas is about 5-90 vol%.

7. A method as claimed in claim 3, wherein the water vapor concentration in said mixed gas is about 10-40 vol%.

8. A method as claimed in claim 3, wherein the temperature of said metallurgical grade silicon is controlled to a value in excess of about 1550°C.

9. A method as claimed in claim 3, comprising the further step of stirring said silicon.

10. A method as claimed in claim 3, wherein said water vapor, said reducing gas and said plasma jet of said inert gas are blown through different nozzles, respectively, and mixed at tips of said nozzles, and blown on a surface of said silicon.

11. A method as claimed in claim 10, wherein when the flow velocity of said plasma jet is $V_P$, the blowing point of said plasma gas is X, the flow velocity of said water vapor is $V_H$, the blowing point of said water vapor is Y, the point at which the center line of flow of said plasma gas intersects the center line of the flow of said water vapor is Z, and the angle X-Z-Y is $\theta$, the step of controlling said process within the definition of the equation:

$$\sin \theta < C(V_P/V_H) \hspace{4cm} \text{equation 1}$$

   wherein C is a constant in the range of about 0.1-0.2.

12. A method as claimed in claim 10, the further step of controlling the removal of boron according to the equation:

$$\sin \theta < C(V_P/V_H) \hspace{4cm} \text{equation 1}$$

   wherein C is a constant in the range of about 0.1-0.2,
   wherein said flow velocity of said plasma jet is $V_P$, said blowing point of said plasma gas is X, the flow velocity of said reducing gas is $V_H$, the blowing point of said reducing gas is Y, the point at which said center line of flow of said plasma gas intersects the center line of flow of said reducing gas is Z, and the angle X-Z-Y is $\theta$.

13. A method as claimed in claim 10, the further step comprising controlling the boron removal in accordance with the equation:

$$d \geq R/\tan \theta \hspace{4cm} \text{equation 2}$$

   wherein when a point at which said center line of flow of said plasma jet intersects a surface of a bath of said molten silicon is Point P, a plane which passes through said Point P and intersects rectangularly said center line of said plasma jet is Plane A, the distance between a foot of a perpendicular set up from a blowing nozzle for water vapor or a blowing nozzle for reducing gas to said Plane A and said Point P is R, and the distance between a blowing nozzle for water vapor or a blowing nozzle for reducing gas and said Plane A is d.

14. A method as claimed in claim 3, wherein said plasma jet of said inert gas and a premixed gas comprising said reducing gas and said water vapor are blown through different nozzles respectively, and mixed at the tips of said nozzles, and then blown on the surface of said molten silicon.

15. A method as claimed in claim 14, comprising the further step of controlling said boron removal according to the equation:

$$\sin \theta < C(V_P/V_H) \qquad \text{equation 1}$$

wherein the flow velocity of said plasma jet is $V_P$, a blowing point of said plasma jet is X, a flow velocity of said water vapor to which said reducing gas is added is $V_H$, a blowing point of said water vapor is Y, a point at which the center line of flow of said plasma jet intersects the center line of a flow of said water vapor to which said reducing gas is added is Z, and the angle X-Z-Y is $\theta$,
and wherein the value of C is about 0.1-0.2.

16. In a method as claimed in claim 14, the further step of controlling boron removal according to the equation:

$$d \geq R/\tan \theta \qquad \text{equation 2}$$

wherein when the point at which said center line of flow of said plasma jet intersects a surface of said molten silicon is Point P, a plane which passes through said Point P and intersects rectangularly said center line of said plasma jet is Plane A, the distance between the foot of a perpendicular set up from a blowing nozzle for water vapor to which said reducing gas is added to said Plane A and said Point P is R, and the distance between a blowing nozzle for water vapor to which said reducing gas is added and said Plane A is d.

17. A method as claimed in claim 3, wherein said inert gas, said water vapor and said reducing gas are premixed and then blown through a plasma torch to the surface of said molten silicon.

18. A method as claimed in claim 17, wherein said plasma electrode is a copper hollow electrode.

19. A method as claimed in claim 2, wherein a single refining container for molten silicon is heated by two different kinds of heating means, and wherein heating and refining are carried out by changing over said means from one to the other, one including the step of blowing the surface of said molten silicon through a plasma torch.

20. A method as claimed in claim 19, wherein said two different kinds of heating steps comprise a non-transfer type plasma heating step and a high frequency induction heating step.

21. A method as claimed in claim 19, wherein said two different kinds of heating steps comprise a non-transfer type plasma heating step and a transfer type plasma heating step.

22. A method as claimed in claim 19, wherein said two different kinds of heating steps comprise a non-transfer type plasma heating step and an electric resistance heating step.

23. A method for as claimed in claim 19, wherein time for changeover of said two different kinds of heating steps is controlled in response to the solid-liquid condition of said surface of said silicon.

24. A method as claimed in claim 2, including the step of heating said silicon and removing boron in two refining containers heated by two different heating steps respectively, wherein said heating and refining steps are carried out by changing over said heating steps by physically transferring said molten silicon from one container to another container.

25. A method as claimed in claim 24, wherein said two different kinds of heating steps comprise a non-transfer type plasma heating step and a high frequency induction heating step.

26. A method as claimed in claim 24, wherein said two different kinds of heating steps comprise a non-transfer type plasma heating step and a transfer type plasma heating step.

27. A method as claimed in claim 24, wherein said two different kinds of heating steps comprise a non-transfer type plasma heating step and an electric resistance heating step.

28. A method as claimed in claim 24, wherein the time for changeover of said two different kinds of heating steps is controlled in response to solid-liquid balance at said surface of said silicon.

29. An apparatus for removing boron from silicon comprising:

   a container for refining said silicon, utilizing heating means comprises at least one kind of heating device including a plasma heating device; and
   a device for blowing water vapor and reducing gas on said molten metallurgical grade silicon.

30. An apparatus for removing boron from silicon as claimed in claim 29, wherein said one container for refining molten silicon is provided with two kinds of heating devices comprising a non-transfer type plasma heating device and a high frequency induction heating device.

31. An apparatus for removing boron from silicon as claimed in claim 29, wherein said one container is provided with two species of heating devices comprising a non-transfer type plasma heating device and a transfer type plasma heating device.

32. An apparatus as claimed in claim 29, wherein said one container for refining solid silicon is provided with two species of heating devices comprising a non-transfer type plasma heating device and an electric resistance heating device.

33. An apparatus as claimed in claim 29, wherein said two containers are provided with different heating devices respectively, and wherein said two different heating means comprise a non-transfer type plasma heating device and a high frequency induction heating device.

34. An apparatus as claimed in claim 29, wherein said two containers are provided with different heating devices comprising a non-transfer plasma heating device and a transfer plasma heating device.

35. An apparatus as claimed in claim 29, wherein said two containers are provided with different heating devices comprising a non-transfer type plasma heating device and an electric resistance induction heating device.

# Fig.1

# Fig.2(a)

WATER VAPOR CONCENTRATION (vol%)

# Fig.2(b)

REDUCING GAS RATIO (vol%)

# Fig.3

# Fig.4

# FIG.5

# Fig.6

CONVENTIONAL
METHOD

# Fig.7

# Fig.8

# Fig.9

EP 0 855 367 A1

Fig.10

Fig.11

EP 0 855 367 A1

# Fig.12(a)

CONVENTIONAL
METHOD

# Fig.12(b)

CONVENTIONAL
METHOD

# Fig.13

METALLURGICAL REFINING PROCESS

(OXIDIZING) GAS

METALLURGICAL GRADE Si → | VACUUM REFINING | PURIFICATION BY DIRECTIONAL SOLIDIFICATION | (INGOT) | OXIDATION REFINING | PURIFICATION BY DIRECTIONAL SOLIDIFICATION | (INGOT) — | SLICE | — WAFER

MATERIAL NAME IS PARENTHESES, AND PROCESS IS BOXES

## CONVENTIONAL METHOD

EP 0 855 367 A1

European Patent
Office

**EUROPEAN SEARCH REPORT**

Application Number

EP 98 10 1009

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 459 421 A (KAWASAKI STEEL CO)<br><br><br>* claims 1,2,5,6 *<br>* page 2, line 52 - line 26 *<br>* figures 1,4 * | 1-3,9,<br>10,19,<br>20,22,<br>29,30 | C01B33/037 |
| A | | 6-8,14,<br>17 | |
| D | & JP 04 228 414 A<br>--- | | |
| X | US 3 442 622 A (MONNIER ROBERT & AL.)<br>* claims 1,3,5 *<br>* column 2, line 18 - line 35 * | 1,2 | |
| A | | 29 | |
| | --- | | |
| X | EP 0 264 045 A (BAYER AG)<br>* claims 1,4,5 *<br>* page 2, line 44 - line 52 * | 1,2 | |
| A | | 29 | TECHNICAL FIELDS SEARCHED (Int.Cl.6) |
| | --- | | |
| A | GB 922 879 A (WACKER-CHEMIE G.M.B.H.)<br>* claims 1,3,4 *<br>* page 2, line 10 - line 16 *<br>* example 2 *<br>* table 1 *<br>--- | 1,2,29 | C01B |
| | -/-- | | |

The present search report has been drawn up for all claims

| Place of search | Date of completion of the search | Examiner |
|---|---|---|
| THE HAGUE | 8 April 1998 | Rigondaud, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 98 10 1009

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | BABA H ET AL: "Removal of boron from molten silicon by argon-plasma mixed with water vapor" TENTH E.C. PHOTOVOLTAIC SOLAR ENERGY CONFERENCE. PROCEEDINGS OF THE INTERNATIONAL CONFERENCE, LISBON, PORTUGAL, 8-12 APRIL 1991, ISBN 0-7923-1389-5, 1991, DORDRECHT, NETHERLANDS, KLUWER ACADEMIC PUBLISHERS, NETHERLANDS, pages 286-289, XP002061839 * the whole document * | 1-3,19, 20,29,30 | |
| A | DATABASE WPI Section Ch, Week 9421 Derwent Publications Ltd., London, GB; Class E36, AN 94-173456 XP002061478 & JP 06 115 922 A (KAWASAKI STEEL CORP) , 26 April 1994 * abstract * | 1-3,19, 20,29,30 | |
| A | PATENT ABSTRACTS OF JAPAN vol. 096, no. 002, 29 February 1996 & JP 07 267624 A  (KAWASAKI STEEL CORP), 17 October 1995, * abstract * | 1-3,29 | TECHNICAL FIELDS SEARCHED (Int.Cl.6) |
| A | PATENT ABSTRACTS OF JAPAN vol. 017, no. 185 (C-1047), 12 April 1993 & JP 04 338108 A  (KAWASAKI STEEL CORP), 25 November 1992, * abstract * | 1-3,29 | |

-/--

The present search report has been drawn up for all claims

| Place of search | Date of completion of the search | Examiner |
|---|---|---|
| THE HAGUE | 8 April 1998 | Rigondaud, B |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

**European Patent Office**

**EUROPEAN SEARCH REPORT**

Application Number

EP 98 10 1009

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,A | PATENT ABSTRACTS OF JAPAN vol. 097, no. 010, 31 October 1997 & JP 09 142823 A (KAWASAKI STEEL CORP), 3 June 1997, * abstract * | 1-3,9,29 | |
| A | DE 26 23 413 A (SIEMENS AG) * the whole document * | 1,29 | |

TECHNICAL FIELDS SEARCHED (Int.Cl.6)

The present search report has been drawn up for all claims

| Place of search | Date of completion of the search | Examiner |
|---|---|---|
| THE HAGUE | 8 April 1998 | Rigondaud, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document